# EUROPÄISCHE PATENTSCHRIFT

(11) **EP 2 598 224 B1**
(45) Veröffentlichungstag und Bekanntmachung des Hinweises auf die Patenterteilung: **23.09.2015**
(21) Anmeldenummer: 11721442.9
(22) Anmeldetag: 20.05.2011
(51) Int. Cl.: C02F 1/20, B01D 19/00, B01D 61/02, C02F 1/44

(54) **VORRICHTUNG UND VERFAHREN ZUR ENTGASUNG WÄSSRIGER MEDIEN**
DEVICE AND METHOD FOR DEGASSING AQUEOUS MEDIA
DISPOSITIF ET PROCÉDÉ POUR LE DÉGAZAGE D'AGENTS AQUEUX

(30) Priorität: 30.07.2010 DE 102010032736
(43) Veröffentlichungstag der Anmeldung: 05.06.2013
(73) Patentinhaber: Sartorius Stedim Biotech GmbH, 37079 Göttingen (DE)
(72) Erfinder: WALTER, Fabian, 37154 Northeim (DE); GRABOSCH, Matthias, 37120 Bovenden (DE); GRÖSCHE, Dennis, 37077 Göttingen (DE)
(74) Vertreter: Schneider, Peter Christian
(86) Internationale Anmeldenummer: PCT/EP2011/002520
(87) Internationale Veröffentlichungsnummer: WO 2012/013256

(56) Entgegenhaltungen:
- JP-A- 2 052 088
- JP-A- 2008 006 393
- US-A- 5 156 739
- US-A- 6 120 689

## Beschreibung

### Gebiet der Erfindung

Die Erfindung betrifft eine Vorrichtung zur Entgasung wässriger Medien mit einem das zu entgasende Medium enthaltenden ersten Behälter, einem mit dem ersten Behälter über eine erste Leitung verbundenen Entgasungsmodul, einem mit dem Entgasungsmodul über eine zweite Leitung verbundenen zweiten Behälter zur Aufnahme des entgasten Mediums, wobei in der ersten Leitung ein einen Rückfluss vom Entgasungsmodul zum ersten Behälter verhinderndes Rückschlagventil angeordnet ist.

Die Erfindung betrifft weiterhin Verfahren zur Entgasung wässriger Medien, bei dem einem Entgasungsmodul aus einem ersten Behälter das zu entgasende wässrige Medium über ein Rückschlagventil zugeführt und nach Verlassen des Entgasungsmoduls das entgaste wässrige Medium in einen drucklosen zweiten Behälter abgeleitet wird.

### Stand der Technik

Aus der JP 2008-006393 A ist eine Vorrichtung und ein Verfahren zur Entgasung wässriger Medien bekannt. Dabei wird aus einem ersten Behälter mit nachgeschalteter Pumpe und Umkehrosmoseanlage das zu entgasende Medium über ein Rückschlagventil einem Entgasungsmodul zugeführt. Das aus dem Entgasungsmodul austretende Medium wird über ein Entlastungsventil einem zweiten Behälter zugeführt.

Nachteilig bei dieser bekannten Vorrichtung ist, dass eine Rückführung von Flüssigkeit aus dem zweiten Behälter zu dem ersten Behälter hin nicht möglich ist. Damit ist es beispielsweise auch nicht möglich, das dem ersten Behälter stromabwärts nachgeschaltete Umkehrosmosemodul durch eine zeitweise Rückführung von Medium aus dem zweiten Behälter zu spülen. Ein Verzicht auf das dem Entgasungsmodul stromaufwärts vorlagerte Rückschlagventil würde zu einem unerwünschten Eintrag von Gas in das System führen.

Aus der US 5 156 739 A ist eine Vorrichtung und ein Verfahren zur Entgasung wässriger Medien bekannt. Dabei wird über eine Pumpe einer Umkehrosmoseanlage aufzubereitendes Wasser zugeführt, die eine Osmosemembran aufweist, wobei aufbereitetes Wasser einem Entgasungsmodul zugeführt und das entgaste Wasser abgeführt wird. Mithilfe des Abwassers aus dem Umkehrosmosemodul wird an das Entgasungsmodul ein Unterdruck angelegt, der zum Entgasen des aufbereiteten Wassers beiträgt.

Nachteilig bei dieser bekannten Vorrichtung und Verfahrens ist, dass eine Rückführung von in dem Entgasungsmodul aufbereiteten Wassers nicht möglich ist.

Weiterhin ist aus der US 6 120 689 A ist eine Vorrichtung und ein Verfahren zur Wasserbereitung in drei hintereinander geschalteten Umkehrosmoseanlagen bekannt. Ein spezielles Entgasungsmodul ist dabei nicht vorgesehen. Ebenfalls nicht vorgesehen und möglich ist eine Rückführung von aufbereiteten Medium um die Umkehrosmosemodule freizuspülen.

Weiterhin ist aus der JP 2052088 A eine Vorrichtung zur Entsalzung von Wasser bekannt, die hintereinander geschaltete Umkehrosmoseanlagen aufweist, denen eine Entgasungsapparatur vorgeschaltet ist, welche eine wasserabweisende gasdurchlässige Membran aufweist.

Nachteilig auch hier ist, dass eine Rückführung von aufbereiteter Flüssigkeit nicht vorgesehen ist.

### Aufgabenstellung

Aufgabe der vorliegenden Erfindung ist es daher, die bekannten Vorrichtungen und Verfahren zur Entgasung von wässrigen Medien so zu verbessern, dass eine einfache Möglichkeit besteht, zumindest zeitweise Flüssigkeit aus dem zweiten Behälter in den ersten Behälter zurückzuführen, ohne Gas in das System einzubringen.

### Darstellung der Erfindung

Diese Aufgabe bezüglich der Vorrichtung wird in Verbindung mit dem Oberbegriff des Anspruches 1 dadurch gelöst, dass in der zweiten Leitung eine den Gasdurchtritt verhindernde hydrophile Membran angeordnet ist, dass zwischen dem Entgasungsmodul und der hydrophilen Membran ein Abzweig mit einem hydrophoben Entgasungsfilter zum Auslass von Gas angeordnet ist, dass eine dritte Leitung vorgesehen ist, die zwischen dem ersten Behälter und dem ersten Rückschlagventil mit der ersten Leitung und zwischen dem zweiten Behälter und der hydrophilen Membran mit der zweiten Leitung verbunden ist, dass in der dritten Leitung zwischen dem ersten Rückschlagventil und der hydrophilen Membran ein einen Fluss in Richtung des zweiten Behälters verhinderndes zweites Rückschlagventil angeordnet ist, und dass stromaufwärts vom ersten Rückschlagventil eine Pumpe angeordnet ist.

Durch die Anordnung von zwei Rückschlagventilen und der Kombination von hydrophiler Membran und hydrophoben Entgasungsfilter wird sicher erreicht, dass sich das Entgasungsmodul abschaltet, sobald ein Unterdruck an dem Entgasungsmodul bzw. seiner Membran anliegt. Damit wird zuverlässig erreicht, dass bei Anlagen mit wechselndem Druck kein Gas in das blasenfrei zu haltende System gelangt. Eine derartige Vorrichtung arbeitet ohne elektrische Volumenstromsteuerung.

Gemäß einer bevorzugten Ausführungsform der Erfindung sind die hydrophile Membran und der hydrophobe Entgasungsfilter in einem Bauteil angeordnet. Der hydrophobe Entgasungsfilter ist bevorzugt als eine hydrophobe Membran ausgebildet. Das eine Bauteil kann dabei aus einem Filtergehäuse bestehen, indem eine plissiert Filterkerze mit einer hydrophilen Membran angeordnet ist. Solange diese Membran unterhalb des so genannten Bubble Points betrieben wird, ist diese wasserbenetzte Membran nicht für Gasblasen durchlässig. Um aber eventuell auftretendes Gas von der Membran fernzuhalten, ist am Filtergehäuse der Umfiltratseite in einem Abzweig der hydrophobe Filter bzw. die hydrophobe Membran angeordnet. Gas, welches die Membranfiltration behindern würde, lässt sich über diesen so genannten Entgasungsfilter leicht entfernen.

Nach einer weiteren bevorzugten Ausführungsform der Erfindung weist das Entgasungsmodul hydrophobe Membranhohlfasern auf, über die das zu entgasende Medium leitbar ist, wobei an der Außenseite der Membran ein Unterdruck anlegbar oder ein Trägergas (Stripgas) über die Membran leitbar ist. Solange der Druck stromaufwärts des ersten Rückschlagventils größer ist als der Druck im Entgasungsmodul, ist das Rückschlagventil geöffnet und das wässrige Medium kann über die hydrophile Membran in den zweiten Behälter transportiert werden.

Gemäß einer weiteren bevorzugten Ausführungsform der Erfindung ist der erste Behälter Teil einer Umkehrosmoseanlage und das zu entgasende Medium ist Wasser, welches von CO₂ befreit werden soll. Die Umkehrosmoseanlage weist dabei ein Umkehrosmosemodul auf, das über die dritte Leitung mit Medium aus dem zweiten Behälter rückspülbar ist. Die erfindungsgemäße Vorrichtung weist hierbei den Vorteil auf, dass eine Rückspülung des Umkehrosmosemoduls möglich ist, ohne Gas in das System einzusaugen.

Gemäß einer weiteren bevorzugten Ausführungsform der Erfindung weist der zweite Behälter einen Füllstandssensor auf, der mit einer elektronischen Steuereinheit der Umkehrosmoseanlage in Verbindung steht. Durch den Füllstandssensor im zweiten Behälter lässt sich die Rückspülung des Umkehrosmosemoduls der Umkehrosmoseanlage in Abhängigkeit von dem Füllstand im zweiten Behälter durchführen.

Die Aufgabe bezüglich des Verfahrens wird in Verbindung mit dem Oberbegriff des Anspruches 8 dadurch gelöst, dass das entgaste wässrige Medium über eine hydrophile Membran dem zweiten Behälter zugeleitet wird, wobei über eine der hydrophilen Membran stromaufwärts vorgelagerte hydrophobe Membran Gas entweichen kann, und dass bei Bedarf unter Umgehung des Entgasungsmoduls Medium aus dem zweiten Behälter über ein zweites Rückschlagventil und eine stromaufwärts angeordnete Pumpe in den ersten Behälter rückführbar ist.

Wenn das Medium aus dem zweiten Behälter zum ersten Behälter hin rückgeführt werden soll, erzeugt die stromaufwärts angeordnete Pumpe einen Unterdruck, der zum Verschließen des ersten Rückschlagventils führt. Gleichzeitig wird durch die dem Entgasungsmodul stromabwärts nachgeschaltete hydrophile Membran sichergestellt, dass durch den in der dritten Leitung befindlichen Saugdruck kein Gas aus dem Entgasungsmodul in den stromabwärts der hydrophilen Membran gelegenen Bereich des Systems eingesaugt wird. Entsprechend wird durch das zweite Rückschlagventil sichergestellt, dass bei Wechsel des Pumpendrucks, d.h. bei Überdruck das zu entgasende Medium über das erste Rückschlagventil und das Entgasungsmodul geleitet wird und das zu entgasendes Medium nicht direkt in den zweien Behälter strömen kann.

Gemäß einer bevorzugten Ausführungsform der Erfindung wird das Medium über eine dem ersten Behälter nachgeordnete Pumpe und ein der Pumpe nachgeordnetes Umkehrosmosemodul, die eine Umkehrosmoseanlage bilden, dem Entgasungsmodul über das erste Rückschlagventil zugeleitet.

Nach Erreichen eines vorgegebenen Füllstandes im zweiten Behälter startet die Umkehrosmoseanlage einen Spülzyklus, bei dem Medium zur Rückspülung des Umkehrosmosemoduls aus dem zweiten Behälter ansaugt wird.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

### Kurzbeschreibung der Zeichnungen

In den Zeichnungen zeigen:
- Figur 1:: ein Blockschaltbild einer Vorrichtung zur Entgasung wässriger Medien mit einem ersten Behälter, der Teil einer Umkehrosmoseanlage ist,
- Figur 2:: eine weitere Vorrichtung zur Entgasung wässriger Medien im Ausschnitt zwischen den Punkten A und B der Figur 1, bei der die hydrophile Membran und der hydrophobe Entgasungsfilter in einem Filtergehäuse angeordnet sind,
- Figur 3:: ein Blockschaltbild der Vorrichtung von Figur 1 zwischen den Punkten A und B mit durch Pfeile dargestellter Förderrichtung im Entgasungszustand und
- Figur 4:: ein Blockschaltbild der Vorrichtung von Figur 3 mit durch Pfeile dargestellter Förderrichtung im Rückspülzustand.

### Beschreibung der Ausführungsbeispiele

Eine Vorrichtung 1 zur Entgasung wässriger Medien besteht im Wesentlichen aus einem ersten Behälter 2, einem ersten Rückschlagventil 3, einem Entgasungsmodul 4, einer hydrophilen Membran 5, einem zweiten Rückschlagventil 6 und einem zweiten Behälter 7.

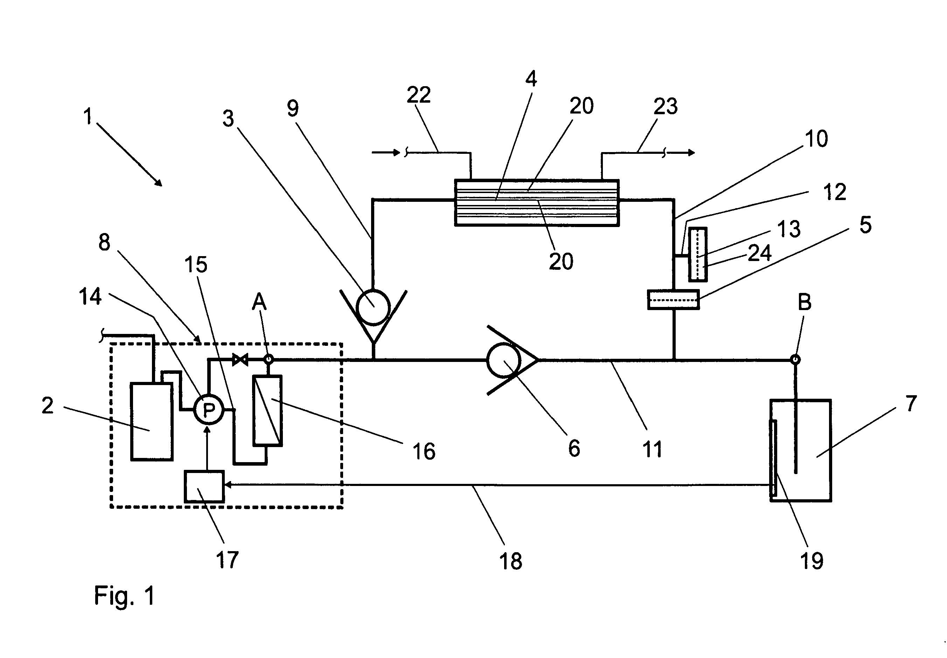

Entsprechend dem Ausführungsbeispiel der Figur 1 ist der erste Behälter 2 Teil einer Umkehrosmoseanlage 8, über die er mit dem Leitungspunkt A der Vorrichtung 1 verbunden ist. Der erste Behälter 2 bzw. der erste Leitungspunkt A ist über eine erste Leitung 9, in der das erste Rückschlagventil 3 angeordnet ist, mit dem Entgasungsmodul 4 verbunden. Das Entgasungsmodul 4 ist über eine zweite Leitung 10, in der die hydrophile Membran 5 angeordnet ist, mit einem zweiten Leitungspunkt B und weiter mit dem zweiten Behälter 7 verbunden. Eine dritte Leitung 11 verbindet die erste Leitung 9 zwischen dem ersten Leitungspunkt A und dem ersten Rückschlagventil 3 mit der zweiten Leitung 10 zwischen dem zweiten Leitungspunkt B und der hydrophilen Membran 5. Zwischen dem Entgasungsmodul 4 und der hydrophilen Membran 5 ist über einen Abzweig 12 der zweiten Leitung 10 ein hydrophober Entgasungsfilter 24, der eine hydrophobe Membran 13 aufweist, angeordnet. Während das erste Rückschlagventil 3 stromaufwärts in Richtung des ersten Behälters 2 seine Sperrwirkung aufweist, weist das zweite Rückschlagventil 6 stromabwärts in Richtung des zweiten Behälters 7 seine Sperrwirkung auf.

Während die hydrophile Membran 5 den Durchtritt von Gas verhindert, verhindert die hydrophobe Membran 13 den Durchtritt von wässrigen Medium.

Die Umkehrosmoseanlage 8 weist stromabwärts vom ersten Behälter 2 eine Pumpe 14 auf, die über eine Pumpleitung 15 mit einem Umkehrosmosemodul 16 verbunden ist, das seinerseits stromabwärts mit dem ersten Leitungspunkt A verbunden ist. Die Umkehrosmoseanlage 8 weist eine elektronische Steuerung 17 auf, die unter anderem die Pumpe 14 steuert und die über eine Signalleitung 18 mit einem im zweiten Behälter 7 angeordneten Füllstandssensor 19 verbunden ist.

Das Entgasungsmodul 4 ist als ein sogenannter Membrankontraktor ausgebildet. Dabei wird das zu entgasende wässrige Medium über hydrophobe Membranhohlfasern 20 geleitet. An der Außenseite der Membranen liegt entweder ein Unterdruck an oder ein Trägergas (Stripgas) wird über die Membranen geleitet. Grundsätzlich ist es auch möglich, bei Unterdruck ein Stripgas zu verwenden. Bedingt durch den Partialdruck des Kohlendioxids CO₂ erfolgt im wässrigen Medium eine Passage des Gases durch die Membran. Das wässrige Medium bzw. Wasser der Umkehrosmoseanlage ist somit von CO₂ und anderen gelösten Gasen abgereichert. Für Flüssigkeiten ist die hydrophobe Membran der Membranhohlfasern 20 eine Barriere.

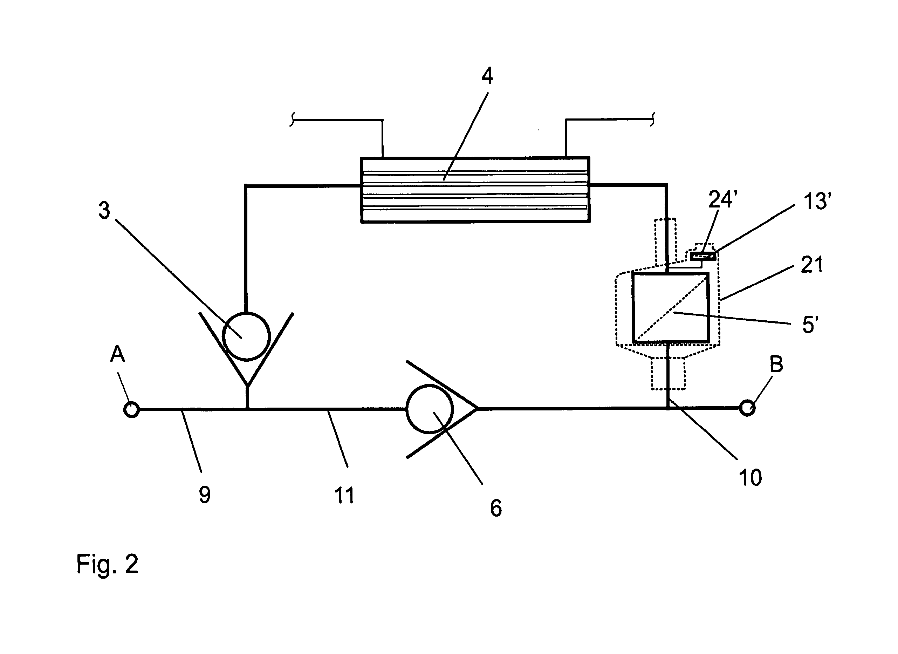

Entsprechend dem Ausführungsbeispiel der Figur 2 sind die hydrophile Membran 5' und der hydrophobe Entgasungsfilter 24' oder die hydrophobe Membran 13' in einem gemeinsamen Filtergehäuse 21 angeordnet.

Dem Entgasungsmodul 4 wird über eine Zuleitung 22 ein Stripgas zugeführt, das über Ableitung 23 wieder abgeführt wird.

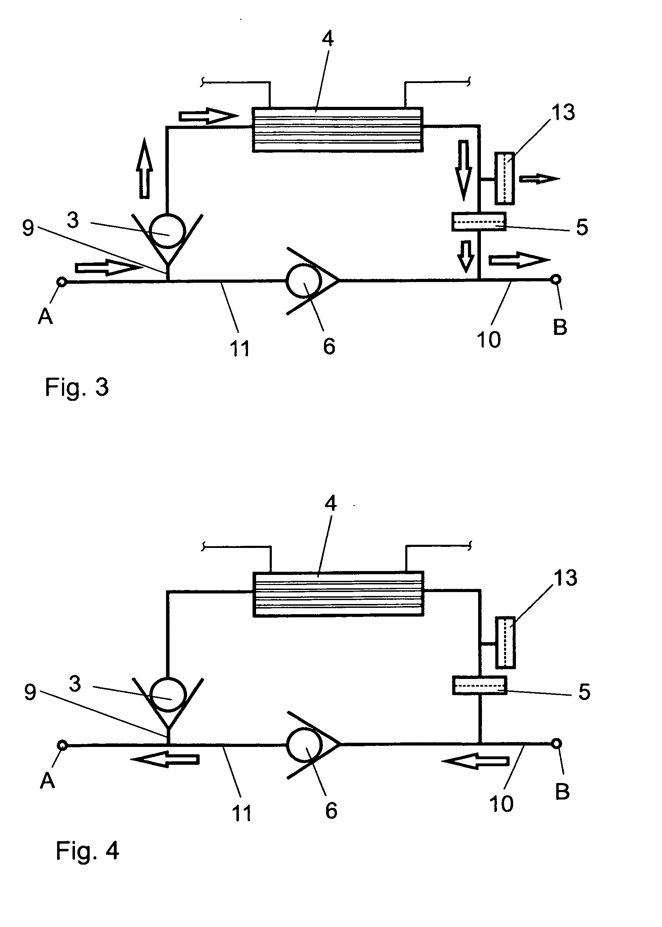

Figur 3 zeigt einen Entgasungsvorgang, bei dem der Druck bei Punkt A größer als der Gasdruck im Entgasungsmodul 4 ist. D.h. das wässrige Medium strömt von Punkt A über das dem Rückschlagventil 3 durch das Entgasungsmodul 4 und die hydrophile Membran 13 zu Punkt B. Der hydrophobe Entgasungsfilter 13 bildet gegen das wässrige Medium eine Barriere.

Das Ausführungsbeispiel der Figur 4 zeigt einen Rückspülvorgang. Wenn der Druck bei dem ersten Leitungspunkt A kleiner als der Gasdruck im Entgasungsmodul 4 ist, strömt das wässrige Medium vom zweiten Leitungspunkt B am Entgasungsmodul 4 vorbei direkt über das zweite Rückschlagventil 6 zu dem ersten Leitungspunkt A. Am Entgasungsmodul 4 liegt dabei ein Unterdruck an, der Gas durch die hydrophoben Membranhohlfasern 20 des Entgasungsmoduls ansaugt. Dies geschieht, bis die Gasphase die hydrophile Membran 5, 5' erreicht. Da die hydrophile Membran 5 einen Bubble Point von über ein bar hat, bildet diese Membran eine Barriere für das Gas. Gasblasen können so nicht zu dem ersten Leitungspunkt A und weiter gelangen.

### Bezugszeichenliste

- 1: Vorrichtung
- 2: erster Behälter
- 3: erstes Rückschlagventil
- 4: Entgasungsmodul
- 5, 5': hydrophile Membran
- 6: zweites Rückschlagventil
- 7: zweiter Behälter
- 8: Umkehrosmoseanlage
- 9: erste Leitung
- 10: zweite Leitung
- 11: dritte Leitung
- 12: Abzweig
- 13, 13': hydrophobe Membran
- 14: Pumpe von 8
- 15: Pumpleitung
- 16: Umkehrosmosemodul
- 17: elektronische Steuerung
- 18: Signalleitung
- 19: Füllstandssensor
- 20: hydrophobe Membranhohlfaser
- 21: Filtergehäuse von 5', 13'
- 22: Zuleitung
- 23: Ableitung
- 24, 24': Entgasungsfilter
- A: erster Leitungspunkt
- B: zweiter Leitungspunkt

## Patentansprüche

1. Vorrichtung (1) zur Entgasung wässriger Medien mit einem das zu entgasende Medium enthaltenden ersten Behälter (2), einem mit dem ersten Behälter (2) über eine erste Leitung (9) verbundenen Entgasungsmodul (4), einem mit dem Entgasungsmodul (4) über eine zweite Leitung (10) verbundenen zweiten Behälter (7) zur Aufnahme des entgasten Mediums, wobei in der ersten Leitung (9) ein einen Rückfluss vom Entgasungsmodul (4) zum ersten Behälter (2) verhinderndes Rückschlagventil (3) angeordnet ist,
**dadurch gekennzeichnet,**
**dass** in der zweiten Leitung (10) eine den Gasdurchtritt verhindernde hydrophile Membran (5, 5') angeordnet ist, dass zwischen dem Entgasungsmodul (4) und der hydrophilen Membran (5) ein Abzweig mit einem hydrophoben Entgasungsfilter (24, 24') zum Auslass von Gas angeordnet ist,
**dass** eine dritte Leitung (11) vorgesehen ist, die zwischen dem ersten Behälter (2) und dem ersten Rückschlagventil (3) mit der ersten Leitung (9) und zwischen dem zweiten Behälter (7) und der hydrophilen Membran (5) mit der zweiten Leitung (10) verbunden ist, dass in der dritten Leitung (11) zwischen dem ersten Rückschlagventil (3) und der hydrophilen Membran (5) ein einen Fluss in Richtung zweiten Behälter (7) verhinderndes zweites Rückschlagventil (6) angeordnet ist, und
**dass** stromaufwärts vom ersten Rückschlagventil (3) eine Pumpe (14) angeordnet ist.

2. Vorrichtung nach Anspruch 1,
**dadurch gekennzeichnet,**
**dass** die hydrophile Membran (5') und der hydrophobe Entgasungsfilter (13') in einem gemeinsamen Filtergehäuse (21) angeordnet sind.

3. Vorrichtung nach Anspruch 1 oder 2,
**dadurch gekennzeichnet,**
**dass** der hydrophobe Entgasungsfilter (24) als eine hydrophobe Membran (13) ausgebildet ist.

4. Vorrichtung nach einem der Ansprüche 1 bis 3,
**dadurch gekennzeichnet,**
**dass** das Entgasungsmodul (4) hydrophobe Membranhohlfasern (20) aufweist, über die das zu entgasende Medium leitbar ist, wobei an der Außenseite der Membran ein Unterdruck anlegbar oder ein Trägergas über die Membran leitbar ist.

5. Vorrichtung nach einem der Ansprüche 1 bis 4,
**dadurch gekennzeichnet,**
**dass** der erste Behälter (2) Teil einer Umkehrosmoseanlage (8) und das zu entgasende Medium Wasser ist, welches von CO₂ befreit werden soll.

6. Vorrichtung nach Anspruch 5,
**dadurch gekennzeichnet,**
**dass** die Umkehrosmoseanlage (8) ein Umkehrosmosemodul (16) aufweist, das über die dritte Leitung (11) mit Medium aus dem zweiten Behälter (7) rückspülbar ist.

7. Vorrichtung nach Anspruch 5 oder 6,
**dadurch gekennzeichnet,**
**dass** der zweite Behälter (7) einen Füllstandssensor (19) aufweist, der mit einer elektronischen Steuereinheit (17) der Umkehrosmoseanlage (8) in Verbindung steht.

8. Verfahren zur Entgasung wässriger Medien, bei dem einem Entgasungsmodul (4) aus einem ersten Behälter (2) das zu entgasende wässrige Medium über ein Rückschlagventil (3) zugeführt und nach Verlassen des Entgasungsmoduls (4) das entgaste wässrige Medium in einen drucklosen zweiten Behälter (7) abgeleitet wird,
**dadurch gekennzeichnet,**
**dass** das entgaste wässrige Medium über eine hydrophile Membran (5) dem zweiten Behälter (7) zugeleitet wird, wobei über eine der hydrophilen Membran (5) stromaufwärts vorgelagerte hydrophobe Membran (13) Gas entweichen kann, und
**dass** bei Bedarf unter Umgehung des Entgasungsmoduls (4) Medium aus dem zweiten Behälter (7) über ein zweites Rückschlagventil (6) und eine stromaufwärts angeordnete Pumpe (14) in den ersten Behälter (2) rückführbar ist.

9. Verfahren nach Anspruch 8,
**dadurch gekennzeichnet,**
**dass** das Medium über eine dem ersten Behälter (2) nachgeordnete Pumpe (14) und ein der Pumpe (14) nachgeordnetes Umkehrosmosemodul (16), die eine Umkehrosmoseanlage (8) bilden, dem Entgasungsmodul (4) über das erste Rückschlagventil (3) zugeleitet wird.

10. Verfahren nach Anspruch 9,
**dadurch gekennzeichnet,**
**dass** nach Erreichen eines vorgegebenen Füllstandes im zweiten Behälter (7) die Umkehrosmoseanlage (8) einen Spülzyklus startet und Medium zur Rückspülung des Umkehrosmosemoduls (16) aus dem zweiten Behälter (7) ansaugt.

## Claims

1. Device (1) for degassing aqueous media, comprising a first container (2) containing the medium to be degassed, a degassing module (4) connected via a first line (9) to the first container (2), a second container (7) for receiving the degassed medium connected via a second line (10) to the degassing module (4), wherein a non-return valve (3) preventing backflow from the degassing module (4) to the first container (2) is arranged in the first line (9),
**characterized in that**,
a hydrophilic membrane (5, 5') preventing the passage of gas is arranged in the second line (10),
a branch comprising a hydrophobic degassing filter (24, 24') for letting out gas is arranged between the degassing module (4) and the hydrophilic membrane (5),
a third line (11) is provided, which is connected to the first line (9) between the first container (2) and the first non-return valve (3) and is connected to the second line (10) between the second container (7) and the hydrophilic membrane (5),
a second non-return valve (6) preventing a flow towards the second container (7) is arranged in the third line (11), between the first non-return valve (3) and the hydrophilic membrane (5), and **in that**
a pump (14) is arranged upstream from the first non-return valve (3).

2. Device according to Claim 1,
**characterised in that**
the hydrophilic membrane (5') and the hydrophobic degassing filter (13') are arranged in a common filter housing (21).

3. Device according to Claim 1 or 2,
**characterised in that**
the hydrophobic degassing filter (24) is designed as a hydrophobic membrane (13).

4. Device according to any of Claims 1 to 3,
**characterised in that**
the degassing module (4) has hydrophobic membrane hollow fibres (20) across which the medium to be degassed can be passed, wherein negative pressure can be created on the exterior side of the membrane or a carrier gas can be passed across the membrane.

5. Device according to any of Claims 1 to 4,
**characterised in that**
the first container (2) is part of a reverse-osmosis system (8) and the medium to be degassed is water, which is to be purged of CO₂.

6. Device according to Claim 5,
**characterised in that**
the reverse-osmosis system (8) has a reverse-osmosis module (16) which can be back-flushed via the third line (11) with medium from the second container (7).

7. Device according to Claim 5 or 6,
**characterised in that**
the second container (7) has a fill-level sensor (19) which is connected to the reverse-osmosis system (8) via an electronic control unit (17).

8. Method for degassing aqueous media in which the aqueous medium to be degassed is conveyed from a first container (2) via a non-return valve (3) to a degassing module(4) and the degassed aqueous medium is conveyed to an unpressurised second container (7) after exiting the degassing module (4),
**characterised in that**
the degassed aqueous medium is conveyed across a hydrophilic membrane (5) to the second container (7), wherein the gas can escape through a hydrophobic membrane (13) arranged upstream from the hydrophilic membrane (5), and that
if necessary, by circumventing the degassing module (4), medium can be returned from the second container (7) into the first container (2) via a second non-return valve (6) and a pump (14) arranged upstream.

9. Method according to Claim 8,
**characterised in that**
the medium is conveyed via a pump (14) arranged downstream from the first container (2) and via a reverse-osmosis module (16) arranged downstream from the pump (14) - which together form a reverse-osmosis system (8) - and via the first non-return valve (3) to the degassing module (4).

10. Method according to Claim 9,
**characterised in that**
after a predetermined fill level has been reached in the second container (7), the reverse-osmosis system (8) initiates a flush cycle, in which medium for back-flushing the reverse-osmosis module (16) is drawn in from the second container (7).

## Revendications

1. Dispositif (1) pour le dégazage de milieux aqueux, comprenant un premier récipient (2) contenant le milieu à dégazer, un module de dégazage (4) raccordé via une première conduite (9) au premier récipient (2), un deuxième récipient (7) raccordé au module de dégazage (4) via une deuxième conduite (10) et destiné à recevoir le milieu dégazé, sachant qu'une soupape anti-retour (3) empêchant un reflux du module de dégazage (4) vers le premier récipient (2) est disposée dans la première conduite (9),
**caractérisé**
**en ce qu'**une membrane hydrophile (5, 5') empêchant le passage du gaz est disposée dans la deuxième conduite (10), en ce qu'une dérivation dotée d'un filtre de dégazage hydrophobe (24, 24') pour l'évacuation du gaz est disposée entre le module de dégazage (4) et la membrane hydrophile (5),
**en ce qu'**il est prévu une troisième conduite (11), qui est raccordée à la première conduite (9) entre le premier récipient (2) et la première soupape anti-retour (3) et à la deuxième conduite (10) entre le deuxième récipient (7) et la membrane hydrophile (5),
**en ce qu'**une deuxième soupape anti-retour (6) empêchant un flux en direction du deuxième récipient (7) est disposée dans la troisième conduite (11) entre la première soupape anti-retour (3) et la membrane hydrophile (5),
et **en ce qu'**une pompe (14) est disposée en amont de la première soupape anti-retour (3).

2. Dispositif selon la revendication 1,
**caractérisé en ce que**
la membrane hydrophile (5') et le filtre de dégazage hydrophobe (13') sont disposés dans un boîtier de filtre (21) commun.

3. Dispositif selon la revendication 1 ou 2,
**caractérisé en ce que**
le filtre de dégazage hydrophobe (24) est réalisé sous la forme d'une membrane hydrophobe (13).

4. Dispositif selon l'une quelconque des revendications 1 à 3,
**caractérisé en ce que**
le module de dégazage (4) possède des fibres de membrane creuses hydrophobes (20) à travers lesquelles le milieu à dégazer peut être dirigé, sachant qu'une dépression peut être appliquée sur le côté extérieur de la membrane ou qu'un gaz porteur peut être dirigé à travers la membrane.

5. Dispositif selon l'une quelconque des revendications 1 à 4,
**caractérisé en ce que**
le premier récipient (2) fait partie d'une installation d'osmose inverse (8) et le milieu à dégazer est de l'eau dont on doit éliminer le CO₂ qu'elle contient.

6. Dispositif selon la revendication 5,
**caractérisé en ce que**
l'installation d'osmose inverse (8) présente un module d'osmose inverse (16) qui, via la troisième conduite (11), peut être rincé à contre-courant avec du milieu provenant du deuxième récipient (7).

7. Dispositif selon la revendication 5 ou 6,
**caractérisé en ce que**
le deuxième récipient (7) présente un capteur de niveau de remplissage (19) qui est relié à une unité de commande électronique (17) de l'installation d'osmose inverse (8).

8. Procédé pour le dégazage de milieux aqueux, selon lequel le milieu aqueux à dégazer est apporté à partir d'un premier récipient (2) à un module de dégazage (4) via une soupape anti-retour (3) et, après avoir quitté le module de dégazage (4), le milieu aqueux dégazé est évacué dans un deuxième récipient (7) dépourvu de pression,
**caractérisé en ce**
**que** le milieu aqueux dégazé est apporté au deuxième récipient (7) via une membrane hydrophile (5),
sachant que le gaz peut s'échapper via une membrane hydrophobe (13) disposée en amont de la membrane hydrophile (5),
et en ce que, en cas de besoin, du milieu peut être ramené, en contournant le module de dégazage (4), du deuxième récipient (7) dans le premier récipient (2) via une deuxième soupape anti-retour (6) et une pompe (14) disposée en amont.

9. Procédé selon la revendication 8,
**caractérisé en ce que**
le milieu est apporté via la première soupape anti-retour (3) au module de dégazage (4) en passant par une pompe (14) disposée à la suite du premier récipient (2) et un module d'osmose inverse (16) disposé à la suite de la pompe (14), qui forment une installation d'osmose inverse (8).

10. Procédé selon la revendication 9,
**caractérisé en ce que**,
à l'atteinte d'un niveau de remplissage prédéfini dans le deuxième récipient (7), l'installation d'osmose inverse (8) démarre un cycle de rinçage et aspire du milieu dans le deuxième récipient (7) pour rincer à contre-courant le module d'osmose inverse (16).
